(19) Europäisches Patentamt / European Patent Office / Office européen des brevets

(11) **EP 2 851 974 A1**

(12) **EUROPEAN PATENT APPLICATION**
published in accordance with Art. 153(4) EPC

(43) Date of publication:
**25.03.2015 Bulletin 2015/13**

(51) Int Cl.:
*H01M 2/16* (2006.01)     *H01M 4/139* (2010.01)
*H01M 10/058* (2010.01)

(21) Application number: **12876981.7**

(22) Date of filing: **17.05.2012**

(86) International application number:
**PCT/JP2012/062686**

(87) International publication number:
**WO 2013/171883 (21.11.2013 Gazette 2013/47)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Toyota Jidosha Kabushiki Kaisha Toyota-shi, Aichi 471-8571 (JP)**

(72) Inventor: **UMEHARA, Masakazu Toyota-shi Aichi 471-8571 (JP)**

(74) Representative: **Kuhnen & Wacker Patent- und Rechtsanwaltsbüro Prinz-Ludwig-Straße 40A 85354 Freising (DE)**

(54) **METHOD FOR MANUFACTURING CELL**

(57)     A method for manufacturing a cell (100) provided with an electrode plate (131) in which a separator layer (141) is integrally formed over an active material layer (133), the method being provided with: a coating step (S4) in which a liquid dispersion (BS) in which resin particles (143) are dispersed is coated onto the active material layer (133), forming an undry separator layer (141p); and a heat drying step (S5) in which the undry separator layer (141p) is heat dried, forming the separator layer (141). Of these, the heat drying step (S5) is a step for heat drying the undry separator layer (141p) at a temperature (Ta) within a surface melting temperature range (TD) in which a surface portion (143h) of the resin particles (143) melts, but the center portion (143g) does not melt.

FIG. 7

EP 2 851 974 A1

**Description**

TECHNICAL FIELD

The present invention relates to a method for manufacturing a battery or cell provided with an electrode sheet having an active material layer on which a separator layer is integrally formed.

BACKGROUND ART

Conventionally, there has been known a battery including an electrode sheet (a positive electrode sheet or a negative electrode sheet) having an active material layer (a positive active material layer or a negative active material layer) on which a separator layer is integrally formed. The separator layer is constituted of for example resin particles and a binding agent interposed between the resin particles to bond the particles. This separator layer is formed in such a manner that a dispersion liquid containing resin particles, a binding agent, and others in a dispersed state is applied to an active material layer to form an undried separator layer, which is then dried by heating. In this separator layer, the binding agent also coats the surfaces of active material particles (positive active material particles or negative active material particles) constituting the active material layer. As a conventional art of the battery including an electrode sheet having an active material layer integrally formed thereon with a separator layer, Patent Document 1 is provided.

RELATED ART DOCUMENTS

PATENT DOCUMENTS

Patent Document 1: JP-A-2000-149906

SUMMARY OF INVENTION

PROBLEMS TO BE SOLVED BY THE INVENTION

However, many of binding agents do not have ion conductivity (e.g., ion conductivity of lithium ions in a lithium ion secondary battery). Thus, a portion of each active material particle, coated with a binding agent, is less likely to cause battery reaction. Thus, a reaction area of each active material particle is decreased and the internal resistance of the battery is increased. On the other hand, to avoid this problem, it is conceivable to eliminate the binding agent contained in a separator layer or reduce the content of the binding agent. However, this results in weakened binding strength between the resin particles and causes the resin particles forming the separator layer to likely drop off at the time of manufacturing or using the battery.

The present invention has been made in view of the circumstances and has a purpose to provide a method for manufacturing a battery to strongly bond resin particles to each other, whereas to eliminate or reduce binding agent to reduce internal resistance of the battery.

MEANS OF SOLVING THE PROBLEMS

To achieve the above purpose, one aspect of the invention provides a method for manufacturing a battery provided with an electrode sheet including: an active material layer made of active material particles; and a separator layer integrally formed on the active material layer and made of thermoplastic resin particles, wherein the method includes: a coating step of applying a dispersion liquid in which the resin particles are dispersed to the active material layer to form an undried separator layer; and a heat-drying step of drying the undried separator layer by heating to form the separator layer, wherein the heat-drying step includes drying the undried separator layer by heating at a temperature within a surface melting temperature range in which each of the resin particles does not melt at a center portion but melts at a surface portion.

According to this battery manufacturing method, it is possible to manufacture a battery in which resin particles are strongly bonded to each other, whereas a binding agent is eliminated or reduced, so that the battery has reduced internal resistance.

In the aforementioned method for manufacturing a battery, further preferably, the resin particles have a thermal property that offers, in differential scanning calorimetry, a peak of total melting heat appearing when each resin particle wholly melts and a peak of surface melting heat appearing when each resin particle does not melt at the center portion but melts at the surface portion, and the surface melting temperature range is a range of $\pm 10.0$°C with respect to the peak temperature of the surface melting heat.

In the aforementioned method for manufacturing a battery, further preferably, the temperature at which the undried separator layer is to be dried by heating in the heat-drying step is a temperature in a range of $\pm 7.0°C$ with respect to the peak temperature.

In the aforementioned method for manufacturing a battery, further preferably, the dispersion liquid is a non-binder dispersion liquid containing no binding agent to be interposed between the resin particles to bond the resin particles.

In the aforementioned method for manufacturing a battery, further preferably, the resin particles are polyethylene particles.

In the aforementioned method for manufacturing a battery, further preferably, the resin particles have an average particle diameter of 1.0 to 5.0 $\mu$m.

BRIEF DESCRIPTION OF THE DRAWINGS

FIG. 1 is a perspective view of a lithium ion secondary battery in an embodiment;
FIG. 2 is a longitudinal cross sectional view of the lithium ion secondary battery in the embodiment;
FIG. 3 is an exploded view of an electrode body, showing a state where a positive electrode sheet and a negative electrode sheet are overlapped one on the other in the embodiment;
FIG. 4 is a perspective view of the negative electrode sheet in the embodiment;
FIG. 5 is a magnified sectional photograph of a separator layer in the embodiment;
FIG. 6 is a partial magnified sectional view of the separator layer, drawn by an outline of the photograph of FIG. 5 in the embodiment;
FIG. 7 is a DSC curve of resin particles in the embodiment;
FIG. 8 is an explanatory view showing a process of manufacturing the negative electrode sheet in the embodiment;
FIG. 9 is an explanatory view showing how to form the separator layer on a negative active material layer in the embodiment;
FIG. 10 is a magnified sectional photograph of a separator layer in a comparative example 4; and
FIG. 11 is a partial magnified sectional view of the separator layer, drawn by an outline of the photograph of FIG. 10 in the comparative example 4.

MODE FOR CARRYING OUT THE INVENTION

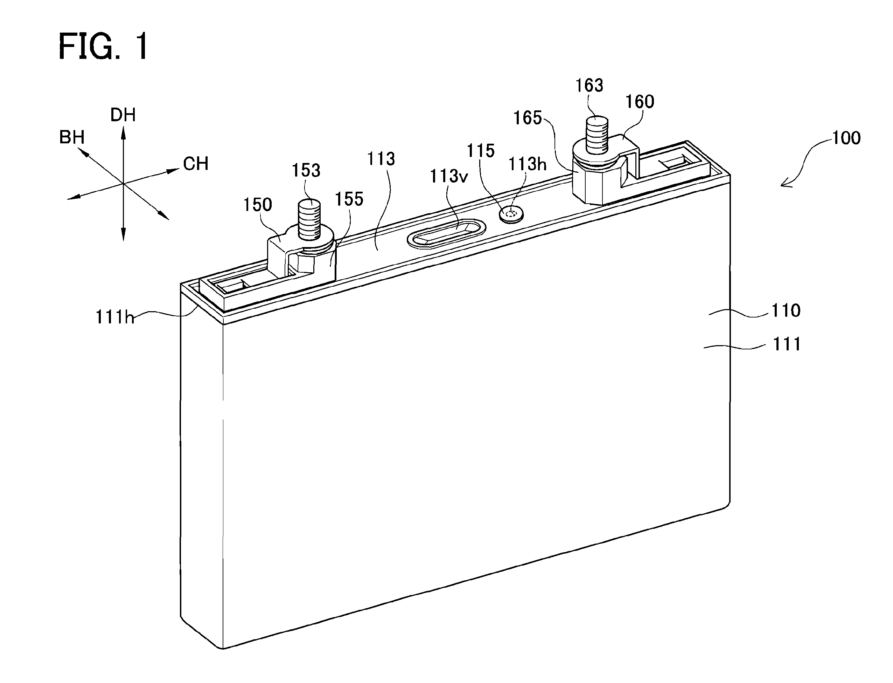

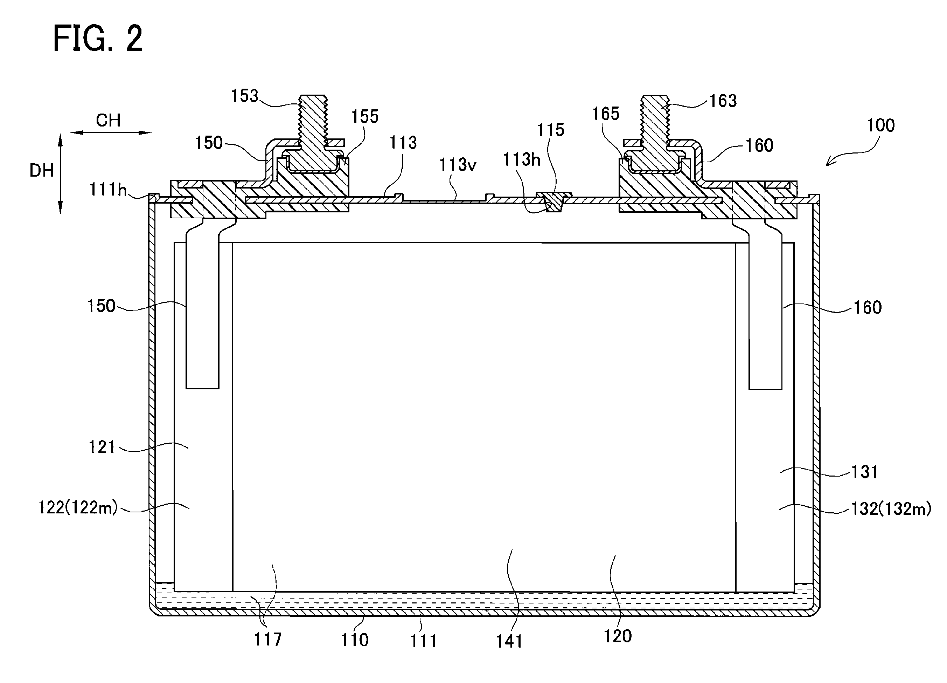

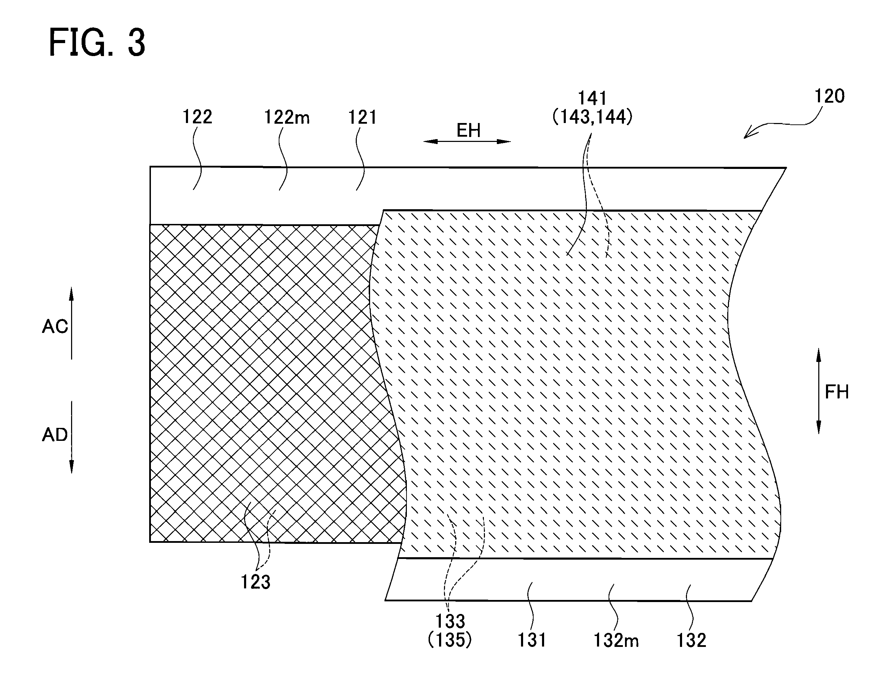

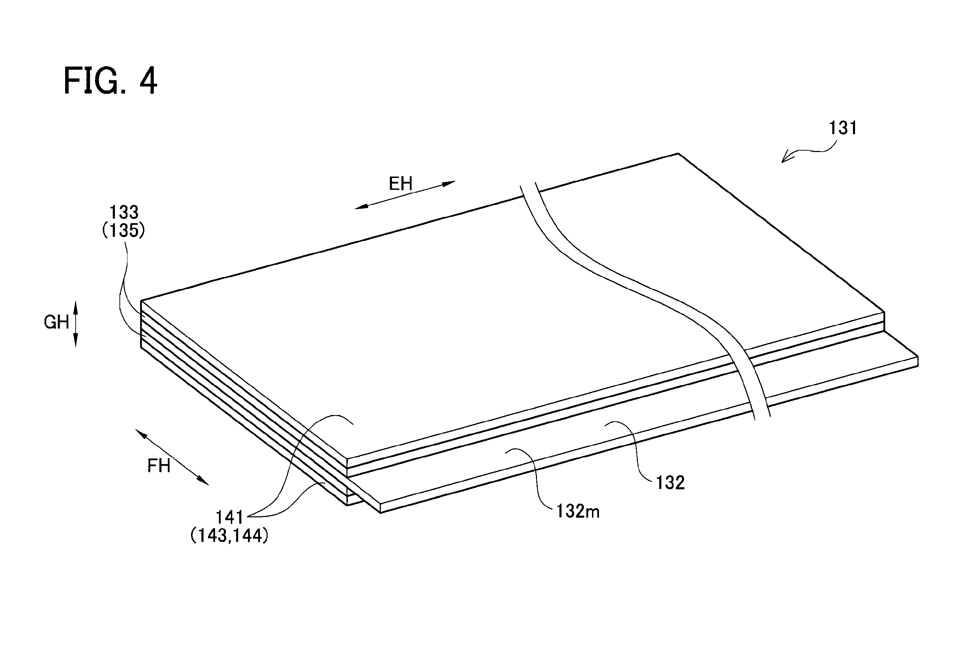

A detailed description of a preferred embodiment of the present invention will now be given referring to the accompanying drawings. FIGs. 1 and 2 show a lithium ion secondary battery 100 (hereinafter, also simply referred to as a battery 100). FIG. 3 shows an exploded state of a wound electrode body 120 of the battery 100. FIG. 4 shows a negative electrode sheet 131. The following explanation is given on the assumption that a thickness direction BH, a width direction CH, and a height direction DH of the battery 100 are defined as shown in FIGs. 1 and 2. Further, in the following explanation, a top side of each of FIGs. 1 and 2 is regarded as an upper side of the battery 100 and a bottom side of each figure is regarded as a lower side of the battery 100.

This battery 100 is a rectangular sealed battery to be mounted in a vehicle such as a hybrid vehicle and an electric vehicle or in a battery using device such as a hammer drill. This battery 100 includes a rectangular parallelepiped battery case 110, the wound electrode body 120 of a flattened shape accommodated in this battery case 110, a positive terminal 150 and a negative terminal 160 each supported in the battery case 110, and others (see FIGs. 1 and 2). In the battery case 110, a non-aqueous electrolyte 117 is also stored.

The battery case 110 is made of metal (concretely, aluminum). This battery case 110 is constituted of a box-shaped case body member 111 opening only at an upper side, and a case lid member 113 welded to the case body member 11 to close an opening 111h thereof (see FIGs. 1 and 2). The case lid member 113 is provided, near a center in a longitudinal direction (the width direction CH of the battery 100), with a non-return safety valve 113v. In the vicinity of this safety valve 113, a liquid inlet 113h is provided for injection of the electrolyte 117 into the battery case 110. This liquid inlet 113h is hermetically sealed with a seal member 115.

Furthermore, in the case lid member 113, near both ends in the longitudinal direction (the width direction CH of the battery 100), the positive terminal (a positive terminal member) 150 and the negative terminal (a negative terminal member) 160 are separately fixed to extend out of the battery case 110. To be concrete, those terminals 150 and 160 are fixed to the case lid member 113 respectively with bolts 153 and 163 for fastening external connection terminals such as a bus bar or a crimp-type terminal to the terminals 150 and 160, and further through insulating members 155 and 165 made of resin.

The electrode body 120 will be explained below (see FIGs. 2 and 3). This electrode body 120 is accommodated sideways in the battery case 110 so that an axis of the electrode body 120 is parallel to the width direction CH (see FIG.

2). This electrode body 120 is formed from a strip-shaped positive electrode sheet 121 and a strip-shaped negative electrode sheet 131 that are overlapped each other (see FIG. 3), wound about an axis, and compressed into a flattened shape. Part of an exposed portion 122m mentioned later of the positive electrode sheet 121 protrudes in a spiral form on one side AC in the axial direction (an upper side in FIG. 3 and a left side in FIG. 2), and is connected (welded) to the aforementioned positive terminal (the positive terminal member) 150. An exposed portion 132m mentioned later of the negative electrode sheet 131 protrudes in a spiral form on the other side AD in the axial direction (a lower side in FIG. 3 and a right side in FIG. 2), and is connected (welded) to the aforementioned negative terminal (the negative terminal member) 160.

The positive electrode sheet 121 includes, as a core member, a strip-shaped positive electrode foil 122 made of aluminum. Part of the positive electrode foil 122 in the width direction (the upper side in FIG. 3) forms the exposed portion 122m extending in a strip shape in the longitudinal direction (right-left direction in FIG. 3). On the other hand, a remaining part (the lower side in FIG. 3) other than the exposed portion 122m is formed, on both main surfaces, with positive active material layers (positive mixture layers) 123 each extending in a strip shape in the longitudinal direction. These positive active material layers 123 are made of positive active material particles, conducting material, and binding agent. The present embodiment uses lithium-cobalt-nickel-manganese composite oxide (concretely, $LiCo_{1/3}Ni_{1/3}Mn_{1/3}O_2$) particles as the positive active material particles and carbon black (concretely, acetylene black) as the conducting material, and polyvinylidene fluoride (PVDF) as the binding agent.

The negative electrode sheet 131 (see FIGs. 3 and 4) includes, as a core member, a strip-shaped negative electrode foil 132 made of copper. Part of the negative electrode foil 132 in the width direction FH (the lower side in FIG. 3) forms the exposed portion 132m extending in a strip shape in the longitudinal direction EH (the right-left direction in FIG. 3). On the other hand, a remaining part (the upper side in FIG. 3) other than the exposed portion 132m is formed, on both main surfaces, with negative active material layers (negative mixture layers, active material layers) 133 each extending in a strip shape in the longitudinal direction EH. On these negative active material layers 133, the separator layers 141 each extending in a strip shape in the longitudinal direction EH are respectively integrally formed. The negative active material layers 133 are made of negative active material particles 135, a binding agent, and a thickening agent. The present embodiment uses graphite particles as the negative active material particles 135, styrene-butadiene rubber (SBR) as the binding agent, and carboxymethyl cellulose (CMC) as the thickening agent.

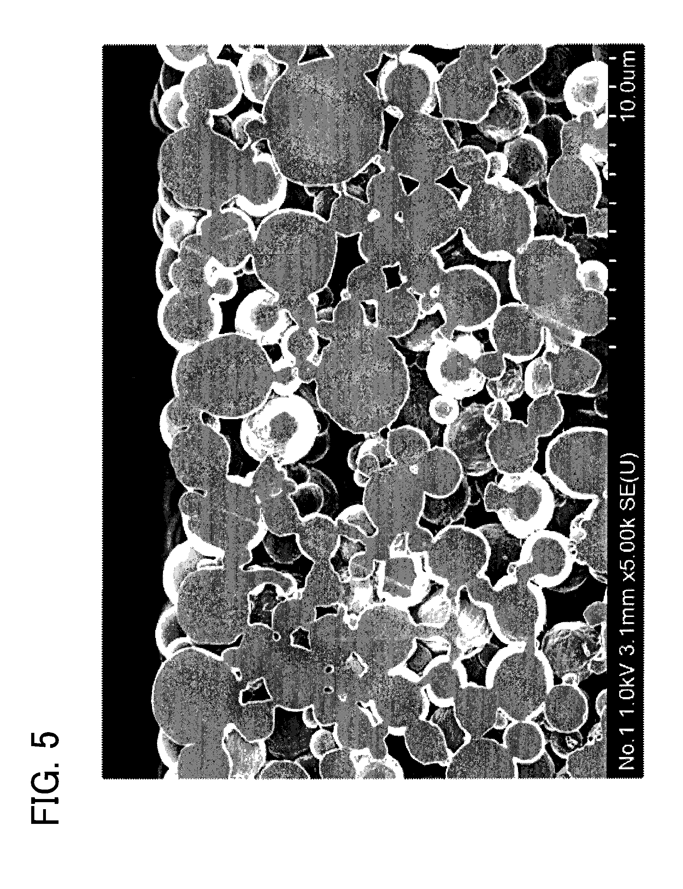

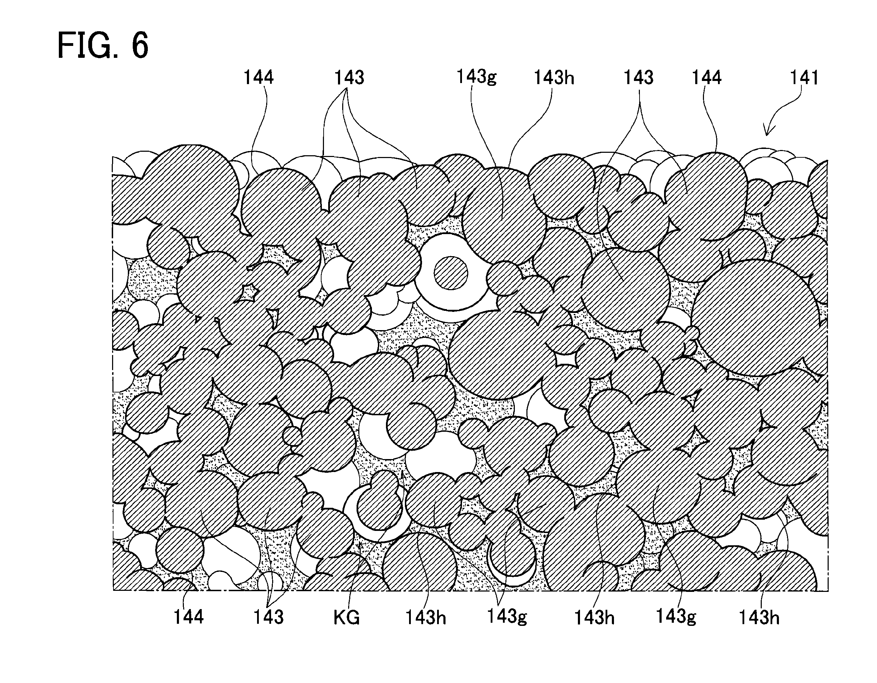

Each separator layer 141 is a porous film having a thickness of 30 $\mu$m and made of thermoplastic resin particles 143 and a thickening agent 144, without containing a binding agent. Specifically, as shown in a photograph of FIG. 5 and FIG. 6, the adjacent resin particles 143 melt and three-dimensionally bonded to each other through respective surface portions 143h, and gaps (voids) KG are formed to three-dimensionally continuously extend among the resin particles 143. A porosity Ca of the separator layer 141 is 35.4%. The present embodiment uses polyethylene (PE) particles as the thermoplastic resin particles 143 and carboxymethyl cellulose (CMC) as the thickening agent 144. A ratio of the resin particles 143 to the thickening agent 144 is 99.7 : 0.3 at weight ratio. The thickening agent (CMC) 144 is considered to stick to the resin particles 143.

The porosity Ca (%) of the separator layer 141 is measured by the following method. Specifically, coating weight per unit area (g/cm$^2$) and the thickness of the separator layer 141 are actually measured, and density $\rho1$ (g/cm$^3$) of the separator layer 141 is calculated. Then, the porosity Ca (%) is calculated by the following formula from this density $\rho1$ and real density $\rho2$ (at a porosity of 0%) as the material of the resin particles 143.

$$Ca = \{1 - (\rho1/\rho2)\} \times 100$$

A separator layer generally contains a binding agent selected for example from a fluorine resin binding agent such as polyvinylidene fluoride (PVDF), polyvinyl fluoride (PVF), and polytetrafluoroethylene (PTFE), and a rubber binding agent such as styrene-butadiene rubber (SBR), nitrile rubber (NBR), and acrylic rubber (ACM). However, the separator layer 141 in the present embodiment does not contain any of those binding agents.

Next, the details of the resin particles 143 will be explained. The resin particles 143 are spherical particles made of PE and have an average particle diameter of 2.5 $\mu$m. As this average particle diameter, a value of D50 determined by a laser diffraction/scattering particle size distribution measuring method is used. For measuring the average particle diameter, Microtrac by Nikkiso Co., Ltd. is used.

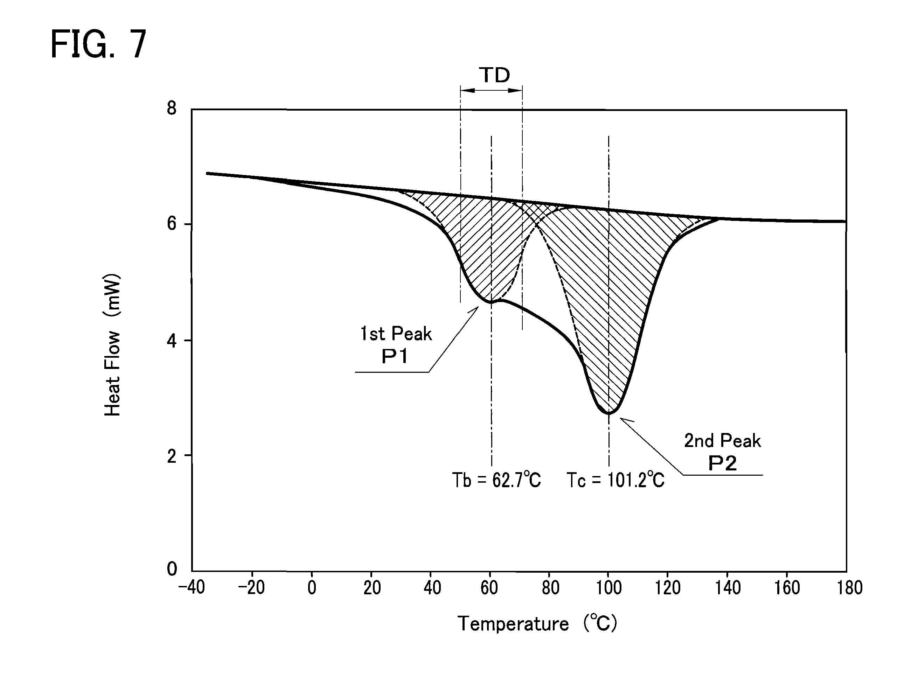

The resin particles 143 have a thermal property that offers two endothermic peaks P1 and P2 as seen in curves of differential scanning calorimetry (DSC) shown in FIG. 7. Specifically, in DSC, there appear the second peak P2 of total melting heat derived when each whole resin particle 143 melts and also the first peak P1 of surface melting heat derived when each resin particle 143 does not melt at a center or core portion 143g but melts at the surface portion 143h, the first peak P1 appearing in a temperature region lower than the second peak P2. In the resin particles 143 in the present embodiment, a peak temperature Tb of the first peak P1 is 62.7°C and a peak temperature Tc of the second peak P2 is 101.2°C.

A DSC measuring device used herein is Q100 by TA Instruments. For data processing, TRC-THADAP-DSC by Toray Research Center, Inc. was used. A measurement atmosphere was nitrogen fluid flow (50 ml/min), a temperature - heat amount calibration was high-purity indium (Tm= 156.61°C, ΔHm=28.71 J/g), a temperature range was about -50 to 250°C, a temperature increasing speed was 10°C/min, an amount of sample was about 5 mg, and a sample vessel was an aluminum standard sample vessel. A region hatched in FIG. 7 was obtained by curve fitting on the assumption of a distribution with two V-shaped protrusions in the DSC measurement result.

From those results, the following states are conceived. In every resin particle 143, the center portion 143g and the surface portion 143h does not melt at a temperature less than 40.0°C. At a temperature from 40.0 to 52.7°C, only a small amount of the resin particles 143 fuse or melt at their surface portions 143h. On the other hand, at a temperature from 52.7 to 72.7°C, it is expected that much resin particles 143 melt at their surface portions 143h, but do not melt at their center portions 143g. Therefore, the temperature range from 52.7 to 72.7°C is regarded as a "surface melting temperature range TD". This temperature range TD corresponds to Tb ±10.0°C with respect to the aforementioned peak temperature Tb (concretely, 62.7°C). At a temperature exceeding 72.7°C, each resin particle 143 wholly melts.

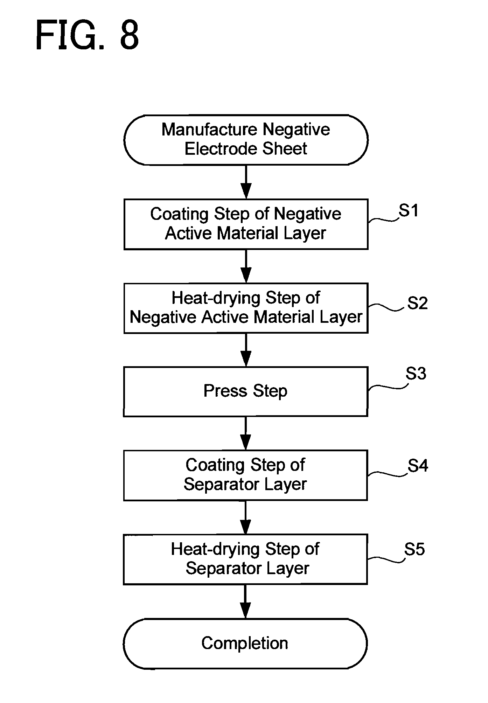

A method for manufacturing the battery 100 mentioned above will be explained. Manufacturing of the negative electrode sheet 131 is first explained (see FIG. 8). Specifically, the negative active material particles 135, the binding agent, and the thickening agent are dispersed in a solvent to prepare negative electrode paste. To be concrete, natural graphite (negative active material), SBR (binding agent), and CMC (thickening agent) are mixed and adjusted in viscosity with a solvent (e.g., water) to obtain slurry (negative electrode paste). Separately, the strip-shaped negative electrode foil 132 made of copper is prepared.

In a coating step S1 of negative active material layer, on one of main surfaces of the negative electrode foil 132, the aforementioned negative electrode paste is applied by a die coating method to form a strip-shaped negative electrode paste layer. Thereafter, in a heat-drying step S2 of negative active material layer, the negative electrode paste layer is dried by heating using hot air when passing through a drying furnace, thereby forming a negative active material layer 133. Similarly, on the other main surface of the negative electrode foil 132, the negative electrode paste is applied to form a negative electrode paste layer (the coating step S1 of negative active material layer), dried by heating to form a negative active material layer 133 (the heat-drying step 2 of negative active material layer). In a press step S3, thereafter, the negative active material layers 133 are pressed by pressure rolls, so that the negative active material layers 133 are compressed in their thickness direction to increase the density (into a predetermined thickness).

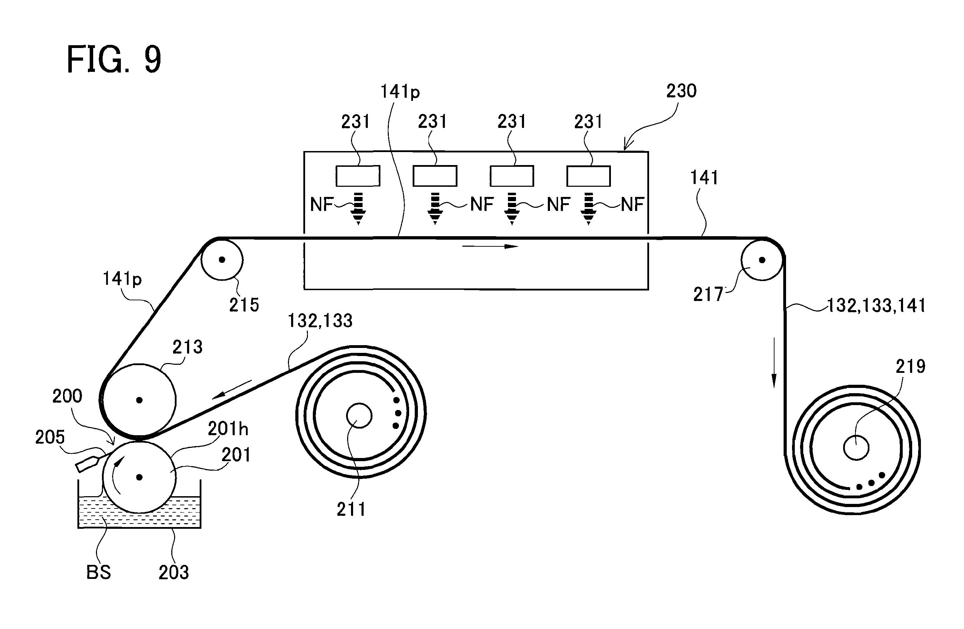

A dispersion liquid BS for forming a separator layer 141 (see FIG. 9) is separately prepared. Specifically, the thermoplastic resin particles 143 and the thickening agent 144 are dispersed in the solvent, thus producing the dispersion liquid BS. To be concrete, the dispersion liquid BS is obtained by mixing PE particles (resin particles) 143 and CMC (thickening agent) 144 at a weight ratio of 99.7 : 0.3 and dispersing this mixture in a solvent (e.g., water).

In a coating step S4 of separator layer, the dispersion liquid BS is applied onto one of the negative active material layers 133 to form an undried separator layer 141p (see FIG. 9). In the present embodiment, a gravure coating device 200 is used to apply the dispersion liquid BS onto the negative active material layer 133. This gravure coating device 200 includes a gravure roll 201, a dispersion liquid bath or vessel 203, and a doctor blade 205. In this coating step S4, the gravure roll 201 is rotated at a predetermined speed to sequentially transfer the dispersion liquid BS stored in the bath 203 to a surface 201h of the gravure roll 201. On the other hand, the dispersion liquid BS excessively transferred to the surface 201h of the roll 201 is scraped by the doctor blade 205. Thus, an appropriate amount of dispersion liquid BS remaining on the surface 201h of the roll 201 is sequentially applied to the negative active material layer 133 on the one main surface of the negative electrode foil 132 unreeled from a wind-off roll 211, thereby forming the undried separator layer 141p.

Successively, in a heat-drying step S5 of separator layer (see FIG., 8), the undried separator layer 141p is dried by heating to form the separator layer 141 (see FIG. 9). In this heat-drying step S5, the negative electrode foil 132 on which the undried separator layer 141p and the negative active material layer 133 are formed is fed forward by rotation of feed rollers 213, 215, and 217 to pass through the drying furnace 230. In the drying furnace 230, a plurality of hot air dryers 231 are installed from each of which hot air NF of a temperature Ta (concretely, 62.0°C) is blown against the undried separator layer 141p to heat and dry the undried separator layer 141p, thereby forming the separator layer 141. Then, the negative electrode foil 132 formed with the separator layer 141 and the negative active material layer 133 is wound up by a wind-up roll 219.

The above temperature Ta (concretely, 62.0°C) is a temperature falling within the surface melting temperature range TD (concretely, 52.7 to 72.7°C) in which each resin particle 143 melts at its surface portion 143h but does not melt at its center portion 143g. This surface melting temperature range TD is a range of Tb±10.0°C with respect to the peak temperature Tb (concretely, 62.7°C) of surface melting heat as mentioned above.

Similarly, the aforementioned dispersion liquid BS is applied onto the negative active material layer 133 on the other side to form the undried separator layer 141p (the coating step S4 of separator layer). Then, this undried separator layer 141p is dried by heating to form the separator layer 141 (heat-drying step S5 of separator layer). In this way, the negative electrode sheet 131 is produced (see FIG. 4).

Furthermore, the positive electrode sheet 121 is separately produced. Specifically, a strip-shaped positive electrode foil 122 made of aluminum is prepared. On one of main surfaces of this positive electrode foil 122, positive electrode paste containing lithium-cobalt-nickel-manganese composite oxide (positive active material particles), acetylene black (conducing material), and PVDF (binding agent) is applied and dried. Thus, the positive active material layer 123 is formed. Similarly, on the other main surface of the positive electrode foil 122, the aforementioned positive paste is applied and dried to form a positive active material layer 123. Then, the positive active material layers 123 are compressed by pressure rolls to increase their density. In this way, the positive electrode sheet 121 is produced (see FIG. 3).

The positive electrode sheet 121 and the negative electrode sheet 131 are overlapped each other (see FIG. 3) and wound about an axis by use of a winding core. Thereafter, this winding is compressed into a flattened shape to form the electrode body 120. Separately, the case lid member 113, the positive terminal member 150, the negative terminal member 160, and bolts 153 and 163 are prepared and set in a die for injection molding. Then, insulating members 155 and 165 are integrally molded to fix the positive terminal member (positive terminal) 150 and the negative terminal member (negative terminal) 160 respectively to the case lid member 113.

Successively, the positive terminal 150 and the negative terminal 160 are each connected (welded) to the electrode body 120. Then, the electrode body 120 is put in the case body member 111 prepared, and the opening 111h of the case body member 111 is closed with the case lid member 113. The case body member 111 and the case lid member 113 are welded by laser to each other (see FIGs. 1 and 2). After that, the electrolyte 117 is poured in the battery case 110 through the liquid inlet 113h, and then the liquid inlet 113h is hermetically sealed with the seal member 115. This battery 100 is then subjected to initial charge, aging, and various tests. Thus, the battery 100 is completed.

(Examples and Comparative examples)

Next, results of tests conducted to verify the effects of the method for manufacturing the battery 100 in the present embodiment will be explained. In Example 1, the negative electrode sheet 131 was manufactured by the manufacturing method of the present embodiment. In this manufacturing method, as mentioned above, the temperature Ta in the heat-drying step S5 of the separator layer 41 is 62.0°C. In Example 2, as shown in Table 1, the temperature Ta in the heat-drying step S5 was set to 57.0°C lower by 5.0 degrees than in Example 1, and remaining conditions were the same as those in Example 1. In Example 3, the temperature Ta in the heat-drying step S5 was set to 67.0°C higher by 5.0 degrees than in Example 1, and remaining conditions were the same as those in Example 1.

On the other hand, in Comparative example 1, the temperature Ta in the heat-drying step S5 was set to 40.0°C. In Comparative example 2, the temperature Ta was set to 50.0°C. In Comparative example 3, the temperature Ta was set to 75.0°C. In Comparative example 4, the temperature Ta was set to 85.0°C. Remaining conditions of the comparative examples are the same as those in Example 1. Each temperature Ta is a value measured with a K-type thermocouple attached near a hot-air outlet of each hot-air dryer 231.

Table 1

|  | Temp. Ta (difference from 1st peak temp. Tb) (°C) | Porosity (%) | Crack Test | | |
|  |  |  | Winding core diameter 1 mm | Winding core diameter 2 mm | Winding core diameter 3 mm |
| Example 1 | 62.0 (-0.7) | 35.4 | ○ | ○ | ○ |
| Example 2 | 57.0 (-5.7) | 35.2 | ○ | ○ | ○ |
| Example 3 | 67.0 (+4.3) | 35.1 | ○ | ○ | ○ |
| Comparative Example 1 | 40.0 (-22.7) | 35.5 | X | X | X |
| Comparative Example 2 | 50.0 (-12.7) | 35.8 | X | X | ○ |
| Comparative Example 3 | 75.0 (+12.3) | 30.2 | ○ | ○ | ○ |
| Comparative Example 4 | 85.0 (+22.3) | 27.7 | ○ | ○ | ○ |

A porosity Ca (%) of the separator layer of each negative electrode sheet in Examples 1 to 3 and Comparative examples 1 to 4 was determined by the aforementioned method. Each negative electrode sheet was subjected to a "Crack Test" of a separator layer and the bonding property of the resin particles 143 was evaluated. To be concrete, each negative electrode sheet was wound on the winding core having a 1-mm diameter, 2-mm diameter, or a 3-mm diameter. The surface states of the separator layers were visually observed. Samples in which no crack was generated in the separator layers are determined to be good (indicated with "○" in Table) and samples in which a crack(s) was generated are determined to be defective ("x" in Table). These results are shown in Table 1.

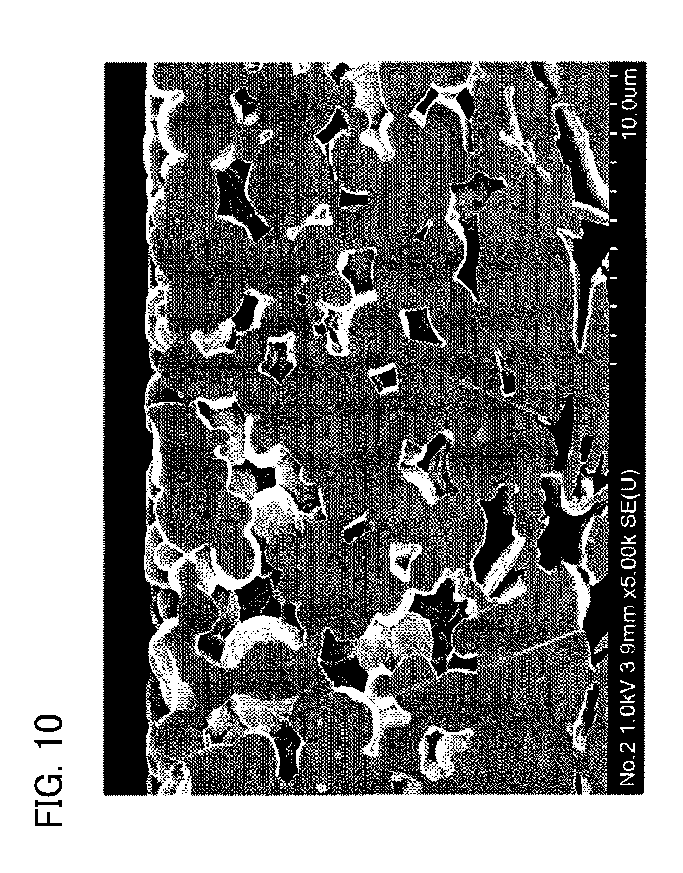

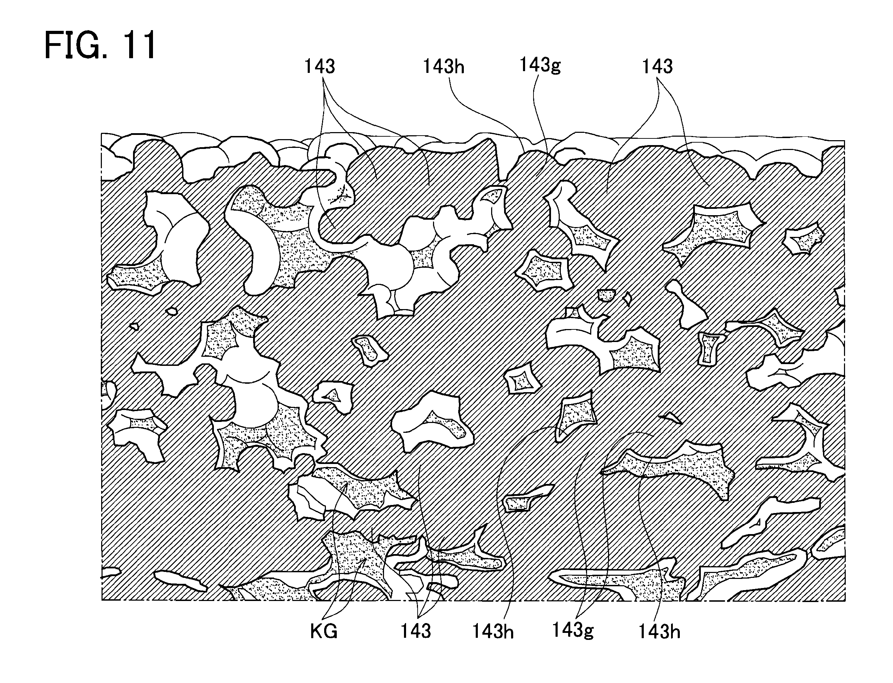

Referring to the porosity Ca of separator layers, firstly, as is seen in Table 1, the separator layers in Comparative examples 3 and 4 have a small porosity Ca (27.7 to 30.2%). FIGs. 10 and 11 show the separator layer of Comparative example 4. The reason why the porosity Ca in the separator layer is small in Comparative examples 3 and 4 is conceived as that since the heat-drying step S5 was conducted at a high temperature Ta (75.0°C or 85.0°C) exceeding the surface melting temperature range TD (52.7 to 72.7°C), the resin particles 143 in the undried separator layer 141p melted not only at the surface portions 143h but also at the center portions 143g. Accordingly, some adjacent resin particles 143 fused with each other (see FIGs. 10 and 11). It is thus conceivable that gaps (voids) KG between the resin particles 143 are made small, resulting in a small porosity Ca.

In contrast, the separator layers in Examples 1 to 3 and Comparative examples 1 and 2 have a large porosity Ca (35.1 to 35.8%) as compared with the separator layers in Comparative examples 3 and 4. The reason why the porosity Ca in the separator layer is large in Examples 1 to 3 is conceived as that since the heat-drying step S5 was conducted at a temperature Ta (57.0°C, 62.0°C, or 67.0°C) falling within the surface melting temperature range TD (52.7 to 72.7°C), the resin particles 143 in the undried separator layer 141p melted only at the surface portions 143h without melting at the center portions 143g. Accordingly, some adjacent resin particles 143 fused with each other only in the surface portions 143h. It is thus conceivable that gaps (voids) KG between the resin particles 143 are made large, resulting in a large porosity Ca.

Also, the reason why the porosity Ca of the separator layers in Comparative examples 1 and 2 is large is conceived as that the heat-drying step S5 was conducted at a temperature Ta (40.0°C or 50.0°C) lower than the surface melting temperature range TD (52.7 to 72.7°C) and thus the resin particles 143 in the undried separator layers 141p little melted even at the surface portions 143h and the resin particles 143 did not fuse with each other. Accordingly, gaps (voids) KG between the resin particles 143 are made large, resulting in a large porosity Ca.

Referring to the result of "Crack Test", as is seen in Table 1, the negative electrode sheets in Comparative examples 1 and 2 were cracked in the separator layers. The reason why the cracks were caused is conceived as that the heat-drying step S5 was conducted at a temperature Ta (40.0°C or 50.0°C) lower than the surface melting temperature range TD (52.7 to 72.7°C) and thus the resin particles 143 in the undried separator layer 141p little melted at the surface portions 143h and the resin particles 143 did not sufficiently fuse with each other. Therefore, bonding strength between the resin particles 143 was weak, causing the resin particles 143 to be separated due to stress applied on the negative electrode sheet when wound on a winding core, and the separator layers were cracked.

In contrast, the negative electrode sheets in the Examples 1 to 3 and Comparative examples 3 and 4, the separator layers were not cracked. The reason why no crack was generated is conceived as that the heat-drying step S5 was conducted at the temperature Ta (Examples 1 to 3) within the surface melting temperature range TD or at the higher temperature Ta (Comparative examples 3 and 4) and thus the resin particles 143 in each undried separator layer 141p melted in at least the surface portions 143h and thereby the adjacent resin particles 143 fused with each other. Therefore, the bonding strength between the resin particles 143 was strong. The resin particles 143 were not separated even if stress was exerted on the negative electrode sheet when wound on a winding core, and the separator layers were not cracked.

The above results reveal that it is preferable to perform the heat-drying step S5 in the surface melting temperature range TD (52.7 to 72.7°C) and particularly in a range of Tb ± 7.0°C with respect to the peak temperature Tb (concretely, 62.7°C) of surface melting heat.

As explained above, according to the method for manufacturing the battery 100, the undried separator layer 141p is dried by heating at the temperature Ta in the surface melting temperature range TD (a range of Tb ± 10.0°C with respect to the peak temperature Tb of surface melting heat) in which the center portion 143g of each resin particle 143 does not melt but the surface portion 143h does melt in order to form the separator layer 141. Accordingly, only the surface portion 143h of each resin particle 143 melts, so that the resin particles 143 fuse with each other only at their surface portions 143h. This can form the separator layers 141 in which the resin particles 143 firmly bond to each other and have gaps (voids) three-dimensionally continuous to each other between the resin particles 143. This makes it possible to eliminate the binding agent contained in the separator layers 141, while allowing the resin particles 143 to firmly bond to each other. Thus, the battery 100 with small internal resistance can be manufactured.

Furthermore, the temperature Ta in the heat-drying step is set in a range of Tb±7.0°C with respect to the peak temperature Tb of surface melting heat. Accordingly, it is possible to appropriately melt the surface portions 143h of the resin particles 143 and further effectively suppress excessive advancing of fusion of the resin particles 143 and decrease in the porosity Ca of the separator layer 141. This can easily form the separator layer 141 in which the resin particles 143 are firmly bonded to each other and with a large porosity Ca.

Since the dispersion liquid BS does not contain the binding agent to be interposed between the resin particles 143 to bond the resin particles 143 to each other, the negative active material particles 135 are not covered with the bonding agent. Thus, and the battery 100 with particularly small internal resistance can be manufactured. Since the resin particles 143 are made from PE particles, furthermore, the separator layer 141 can be formed with good resistance to the electrolyte 117. The PE particles are low in melting point and thus easy to handle. By using the resin particles 143 having an average particle diameter of 1.0 to 5.0 μm, the gaps (voids) between the resin particles 143 can be formed in appropriate sizes.

The present invention is explained along the above embodiment but is not limited thereto. The invention may be embodied in other specific forms without departing from the essential characteristics thereof. For instance, although the invention is applied to form the negative electrode sheet 131 in the above embodiment, the invention may be applied to form the positive electrode sheet 121.

In the above embodiment, heat-drying of the undried separator layer 141p in the heat-drying step S5 is performed by blowing hot air NF against the undried separator layer 141p, but it is not limited thereto. For instance, the undried separator layer 141p may be dried by heating using an IR heater, IH heater, or the like.

The above embodiment exemplifies PE particles as the thermoplastic resin particles 143 to form the separator layer 141, but the invention is not limited thereto. The material of the thermoplastic resin particles may be for example polyethylene copolymer, polypropylene (PP), polypropylene copolymer, polyvinyl chloride (PVC), polystyrene (PS), polyvinyl acetate (PVAc), polytetrafluoroethylene (PTFE), acrylonitrile butadiene styrene resin (ABS resin), acrylonitrile styrene resin (AS resin), acrylic resin (PMMA), polyamide (PA), polyacetal (POM), polycarbonate (PC), polyethylene terephthalate (PET), polyphenylene sulfide (PPS), thermoplastic polyimide (PI), polyamide-imide (PAI), and others.

A particularly preferable one is polyolefin resin such as polyethylene, polyethylene copolymer, polypropylene, and polypropylene copolymer. This is because the polyolefin resin has a suitable melting point for a material constituting the separator layer. In other words, when the temperature of a battery rises over an upper limit temperature (a temperature at which the electrolyte begins altering, e.g., 60°C) of battery operation, the separator layer promptly melts to close the gaps (voids) in the separator layer itself, thereby appropriately shutting down the battery (stopping battery reaction).

The above embodiment exemplifies CMC as the thickening agent 144 to be added to the dispersion liquid BS in order to form the separator layer 141. However, the invention is not limited thereto. The thickening agent may be water-soluble polymer such as methyl cellulose (MC) and polyvinyl alcohol (PVA).

REFERENCE SIGNS LIST

| | |
|---|---|
| 100 | Lithium ion secondary battery (Battery) |
| 120 | Electrode body |
| 121 | Positive electrode sheet |
| 131 | Negative electrode sheet (Electrode sheet) |
| 132 | Negative electrode foil |
| 133 | Negative active material layer (Negative mixture layer, Active material layer) |
| 141 | Separator layer |
| 141p | Undried separator layer |
| 143 | Resin particle |
| 143h | Surface portion |
| 143g | Center portion |
| 144 | Thickening agent |
| BS | Dispersion liquid |
| KG | Gap (Void) |
| NF | Hot air |
| P1 | First peak |
| P2 | Second peak |

**Claims**

**1.** A method for manufacturing a battery provided with an electrode sheet including:

an active material layer made of active material particles; and
a separator layer integrally formed on the active material layer and made of thermoplastic resin particles,
wherein the method includes:

a coating step of applying a dispersion liquid in which the resin particles are dispersed to the active material layer to form an undried separator layer; and
a heat-drying step of drying the undried separator layer by heating to form the separator layer,
wherein the heat-drying step includes drying the undried separator layer by heating at a temperature within a surface melting temperature range in which each of the resin particles does not melt at a center portion but melts at a surface portion.

2. The method for manufacturing a battery according to claim 1, wherein
the resin particles have a thermal property that offers, in differential scanning calorimetry, a peak of total melting heat appearing when each resin particle wholly melts and a peak of surface melting heat appearing when each resin particle does not melt at the center portion but melts at the surface portion, and
the surface melting temperature range is a range of ±10.0°C with respect to the peak temperature of the surface melting heat.

3. The method for manufacturing a battery according to claim 2, wherein the temperature at which the undried separator layer is to be dried by heating in the heat-drying step is a temperature in a range of ±7.0°C with respect to the peak temperature.

4. The method for manufacturing a battery according to any one of claims 1 to 3, wherein the dispersion liquid is a non-binder dispersion liquid containing no binding agent to be interposed between the resin particles to bond the resin particles.

5. The method for manufacturing a battery according to any one of claims 1 to 4, wherein the resin particles are polyethylene particles.

6. The method for manufacturing a battery according to any one of claims 1 to 5, wherein the resin particles have an average particle diameter of 1.0 to 5.0 μm.

FIG. 1

EP 2 851 974 A1

# FIG. 2

# FIG. 3

EP 2 851 974 A1

# FIG. 4

131

EH

133
(135)

GH

FH

141
(143,144)

132m

132

EP 2 851 974 A1

FIG. 5

No.1 1.0kV 3.1mm x5.00k SE(U)    10.0um

FIG. 6

144    143         143g    143h    143    144    141

144    143    KG    143h    143g    143h    143g    143h

EP 2 851 974 A1

## FIG. 7

# FIG. 8

```
┌─────────────────────────┐
│  Manufacture Negative   │
│     Electrode Sheet     │
└─────────────────────────┘
            │
            ▼
┌─────────────────────────┐
│ Coating Step of Negative│  S1
│  Active Material Layer  │
└─────────────────────────┘
            │
            ▼
┌─────────────────────────┐
│   Heat-drying Step of   │  S2
│ Negative Active Material Layer│
└─────────────────────────┘
            │
            ▼
┌─────────────────────────┐
│      Press Step         │  S3
└─────────────────────────┘
            │
            ▼
┌─────────────────────────┐
│    Coating Step of      │  S4
│    Separator Layer      │
└─────────────────────────┘
            │
            ▼
┌─────────────────────────┐
│   Heat-drying Step of   │  S5
│    Separator Layer      │
└─────────────────────────┘
            │
            ▼
┌─────────────────────────┐
│      Completion         │
└─────────────────────────┘
```

# FIG. 9

FIG. 10

FIG. 11

143    143h    143g    143

KG    143    143h    143g    143h

EP 2 851 974 A1

## INTERNATIONAL SEARCH REPORT

| International application No. |
| --- |
| PCT/JP2012/062686 |

**A. CLASSIFICATION OF SUBJECT MATTER**
*H01M2/16*(2006.01)i, *H01M4/139*(2010.01)i, *H01M10/058*(2010.01)i

According to International Patent Classification (IPC) or to both national classification and IPC

**B. FIELDS SEARCHED**

Minimum documentation searched (classification system followed by classification symbols)
H01M2/16, H01M4/139, H01M10/058

Documentation searched other than minimum documentation to the extent that such documents are included in the fields searched
| | | | |
| --- | --- | --- | --- |
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2001-351616 A  (Toyota Motor Corp.),<br>21 December 2001 (21.12.2001),<br>claim 5; paragraphs [0018], [0019]<br>(Family: none) | 1-6 |
| A | JP 2000-149906 A  (Mitsubishi Chemical Corp.),<br>30 May 2000 (30.05.2000),<br>entire text<br>(Family: none) | 1-6 |
| A | JP 4-292856 A  (Nippon Muki Co., Ltd.),<br>16 October 1992 (16.10.1992),<br>paragraph [0015]<br>(Family: none) | 1-6 |

☐ Further documents are listed in the continuation of Box C.    ☐ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>13 August, 2012 (13.08.12) | Date of mailing of the international search report<br>21 August, 2012 (21.08.12) |
| --- | --- |
| Name and mailing address of the ISA/<br>    Japanese Patent Office | Authorized officer |
| Facsimile No. | Telephone No. |

Form PCT/ISA/210 (second sheet) (July 2009)

**21**

**EP 2 851 974 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000149906 A